# EUROPEAN PATENT APPLICATION

(11) **EP 0 721 792 A1**
(43) Date of publication of application: **17.07.1996**
(21) Application number: 95118281.5
(22) Date of filing: 21.11.1995
(51) Int. Cl.: B01D 46/52, B60H 3/06

(54) **Air filter for vehicle compartment, with two polyurethane supports having different hardness, and method for making this filter**

(30) Priority: 16.01.1995 IT TO950022
(71) Applicant: TECNOCAR S.r.l., I-10146 Turin (IT)
(72) Inventor: Volpe, Stefano, I-10143 Turin (IT)
(74) Representative: Robba, Eugenio

(57) **Abstract**

An air filter (1) for vehicle compartment is described and includes: a filtering element (3) composed of a pleated sheet made of non-woven fabric; a first, internal supporting element (5) made of polyurethane, placed around the filtering element (3) and in contact with it; and a second, external supporting/gasketing element (7) made of polyurethane, placed around the first supporting element (5) and in contact with it. The first supporting element (5) is made of a polyurethane whose hardness is different from the hardness of the polyurethane the second supporting/gasketing element (7) is made of.

A method for manufacturing the filter (1) is further described.

## Description

The present invention refers to a filter for the air that penetrates inside vehicle compartments, said filter being equipped with two supports, both made of polyurethane, with polyurethanes having two different hardnesses; the present invention further refers to a method for making such filter.

Filters with two supports to be used for the air in vehicle compartments, each of these supports being made of polyurethane but with different hardness with respect to the other support, are not known in the art; air filters for vehicle compartments are commercially sold, the shape of these filters being substantially rectangular, wherein the filtering element is composed of a non-woven fabric and is surrounded by a plastic frame operating as support and as bearing for the filter on the air outlet mouth for the air entering vehicle compartments. In particular applications, this plastic frame is integrated by a further external frame, made of spongy foamy material and usually glued to the internal plastic frame. This external spongy frame operates as container and gasket, to prevent the passage of unfiltered air outside the filter itself. This type of air filters for vehicle compartments must be produced through a complex, multi-stage process, that is not profitable for high production volumes.

There is further known, from Italian Utility Model Application No. TO94U0̸0̸0̸0̸70̸ assigned to the Applicant of the present invention, an air filter for vehicle compartment equipped with a support made of soft polyurethane, produced through an apparatus to produce air filters, that is the subject of European Patent n. 0̸ 486 846 assigned to the Applicant of the present invention. This filter, however, is not equipped with a second external support operating as a gasket.

Object of the present invention is solving prior art problems, providing an air filter for vehicle compartment that is an improvement of the air filter disclosed in Italian Utility Model Application No. TO94U0̸0̸0̸0̸70̸ and that is equipped with two polyurethane supports, each one being of a different hardness with respect to the other, firmly joined together with no need to employ glue or other similar materials.

A further object of the present invention is providing a process for manufacturing an air filter for vehicle compartment of the above type, such process only employing two production stages and allowing to quickly and efficiently produce such novel filter.

The above and other objects and advantages of the invention, which will appear from the following description, are obtained with an air filter for vehicle compartment comprising a filtering element composed of a pleated sheet made of non-woven fabric, characterized in that it further comprises:
- a first, internal supporting element made of polyurethane, said first supporting element being placed around the filtering element and in contact therewith; and
- a second, external supporting/gasketing element made of polyurethane, said second supporting/gasketing element being placed around said first supporting element and in contact therewith;
said first supporting element being made of a polyurethane whose hardness is different from the hardness of the polyurethane said second supporting/gasketing element is made of.

The present invention further relates to a method for manufacturing an air filter for vehicle compartment, said filter having two supports made of polyurethane with two different hardnesses, said method comprising the steps of:
- preparing a filtering element made of non-woven fabric; and
- forming, around said filtering element, a first, internal supporting element made of polyurethane and a second, external supporting/gasketing element made of polyurethane whose hardness is different from the polyurethane said first supporting element is made of;
characterized in that said step of forming said first supporting element and said second supporting/gasketing element comprises the steps of:
- injecting said polyurethanes with different hardnesses into two respective recesses, one of these recesses being internal and in contact with said filtering element and the other one of these recesses being external and separated from said internal recess; and
- connecting said two recesses, by displacing a separating means between them, whereby the two polyurethane elements get in contact one with the other due to the expansion of the polyurethane itself and are anchored one to the other.

The method and air filter of the present invention are realized using an apparatus that is the subject of Italian Patent Application No. TO94A0̸0̸0̸455, assigned to the Applicant of the present Application.

The present invention will be better described by some preferred embodiments thereof, given as a non limiting example, with reference to the enclosed drawings, in which:
- Figure 1 is a top view of an embodiment of the air filter for vehicle compartment according to the present invention; and
- Figure 2 is a side view, partially in section, of the filter shown in Figure 1.

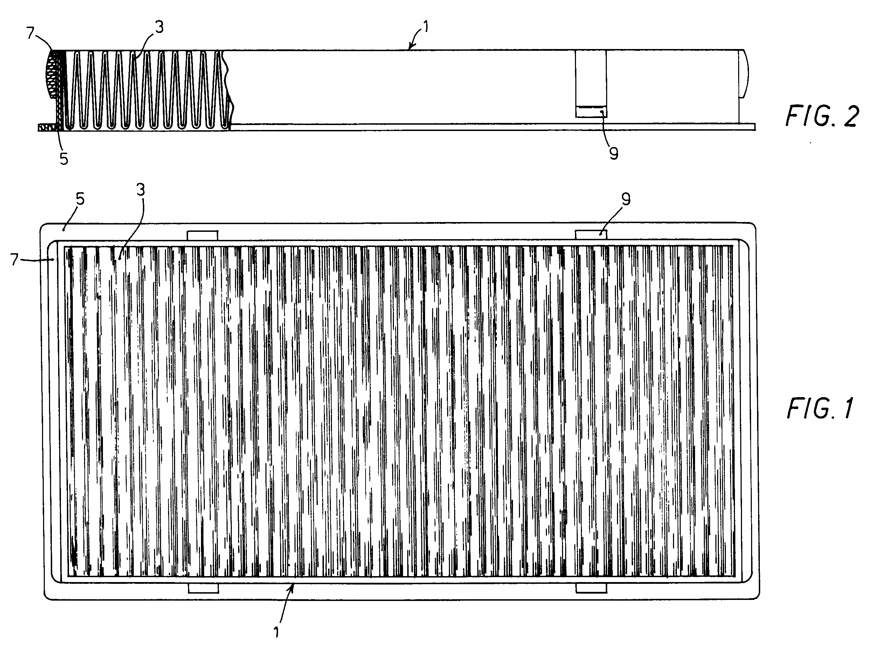

With reference to the Figures, an air filter 1 for vehicle compartment essentially includes a filtering element 3 whose shape is substantially rectangular, composed of a pleated sheet made of non-woven fabric (such filtering element 3 has been shown in partial cross-section only in Figure 2, while the top view thereof has been omitted, due to clarity reasons in the drawing, in Figure 1).

In order to insert the filter 1 on the air outlet mouth (not shown) of the vehicle compartment, it is necessary to provide a first, internal supporting element 5, that in the embodiment shown is composed of solid and stiff polyurethane (hardness measured in Shore D), whose features are like those of the plastic, since it operates as support for the filter 1. This first supporting element 5 is placed around the filtering element 3 in such a way as to be in contact therewith on its longer, pleated sides (according to the embodiment shown), and so that the shorter sides (always according to the embodiment shown) of the filtering element 3 are annealed inside the first supporting element 5.

In order to guarantee both a further support, and a gasket preventing unfiltered air from going out of the mouth without passing from the filter 1, the filter 1 itself is further equipped with a second, external supporting/gasketing element 7, also made of polyurethane, but with different hardness from that of the first supporting element 5. In the preferred embodiment, the poluyrethane of the second supporting/gasketing element 7 is a soft and foamed polyurethane (hardness measured in Shore A), whose hardness is less than that of the first polyurethane. The second supporting/gasketing element 7 is placed around the first supporting element 5 and is put in contact with the latter one, after the expansion, in a way that is well known in the art and that therefore will not be described herein.

The filter 1 can be equipped with a plurality of tongues 9 that facilitate its insertion on the air outlet mouth.

The above-described filter 1, due to the unmovable contact between the two supporting elements 5 and 7 one with the other and with the filtering element 3, provides an efficient filtering arrangement for air in vehicle compartments, which arrangement is at the same time easy to install and quick and inexpensive to produce.

The method for manufacturing the air filter 1 for vehicle compartment according to the present invention will now be described.

This method includes a first step of preparing the filtering element 3, composed of a pleated sheet made of non-woven fabric, by inserting it in a suitable die, described in detail in the above-mentioned Italian Patent Application No. TO94A0̸0̸0̸455.

The step of forming the two supporting elements 5 and 7 made of polyurethane around the filtering element is then carried out. Since the two polyurethanes of the two supporting elements 5 and 7 have a different hardness, they must be kept separated in a first stage of the forming step.

Then injection of the two polyurethanes with different hardness is performed into two respective recesses (not shown), one of them being internal and in contact with the filtering element 3 and the other one being external and separated from the internal recess by a mobile bulkhead (not shown) or by other similar means that are movable between a closing position and an opening position as regard the two recesses. Due to this first injection stage, the stiff and solid polyurethane of the embodiment shown gets immediately in contact with the filtering element 3 on the longer sides thereof, while the related shorter sides, as said above, are annealed in the polyurethane itself, thereby completing the smooth connection of the first supporting element 5 to the filtering element 3.

After about 3-10̸ seconds, during the expansion of the "external" soft polyurethane, the second stage of the forming step is carried out, by connecting the two recesses, for example by lifting the intermediate bulkhead up. The two polyurethanes thus get in contact one with the other due to the expansion of the external soft polyurethane and are unmovably anchored one to the other, thereby completing the arrangement of the second supporting/gasketing element 7 around the first supporting element 5.

Some embodiments of the invention have been described, but obviously numerous modifications and variations can be performed within the same inventive idea. For example, the polyurethane composing the first supporting element 5 can be, according to the type of application, a soft and foamed polyurethane, while the polyurethane composing the second supporting/gasketing element 7 can be stiff and solid; or alternatively, both polyurethanes can be of the soft and foamed type, but with different hardness one from the other; or, further still, both polyurethanes can be of the stiff and solid type, but always with different hardness one from the other.

## Claims

1. Air filter (1) for vehicle compartment comprising a filtering element (3) composed of a pleated sheet made of non-woven fabric, characterized in that it further comprises:
- a first, internal supporting element (5) made of polyurethane, said first supporting element (5) being placed around the filtering element (3) and in contact therewith; and
- a second, external supporting/gasketing element (7) made of polyurethane, said second supporting/gasketing element (7) being placed around said first supporting element (5) and in contact therewith;
said first supporting element (5) being made of a polyurethane whose hardness is different from the hardness of the polyurethane said second supporting/gasketing element (7) is made of.

2. Filter (1) according to claim 1, characterized in that said first supporting element (5) is made of a polyurethane whose hardness is higher than the hardness of the polyurethane said second supporting/gasketing element (7) is made of.

3. Filter (1) according to claim 1, characterized in that said first supporting element (5) is made of a polyurethane whose hardness is lower than the hardness of the polyurethane said second supporting/gasketing element (7) is made of.

4. Filter (1) according to claim 1 or 2, characterized in that said first supporting element (5) is made of a stiff and solid polyurethane, whose hardness is greater than the hardness of the soft and foamed polyurethane said second supporting/gasketing element (7) is made of.

5. Filter (1) according to any one of the previous claims, characterized by being further equipped with a plurality of insertion tongues (9).

6. Method for manufacturing an air filter (1) for vehicle compartment, said filter having two supports (5, 7) made of polyurethane with two different hardnesses, said method comprising the steps of:
- preparing a filtering element (3) made of non-woven fabric; and
- forming, around said filtering element (3), a first, internal supporting element (5) made of polyurethane and a second, external supporting/gasketing element (7) made of polyurethane whose hardness is different from the polyurethane said first supporting element (5) is made of;
characterized in that said step of forming said first supporting element (5) and said second supporting/gasketing element (7) comprises the steps of:
- injecting said polyurethanes with different hardnesses into two respective recesses, one of these recesses being internal and in contact with said filtering element (3) and the other one of these recesses being external and separated from said internal recess; and
- connecting said two recesses, by displacing a separating means between them, whereby the two polyurethane elements (5, 7) get in contact one with the other due to the expansion of the polyurethane itself and are anchored one to the other.
